# EUROPÄISCHE PATENTSCHRIFT

(11) **EP 1 319 135 B1**
(45) Veröffentlichungstag und Bekanntmachung des Hinweises auf die Patenterteilung: **19.11.2003**
(21) Anmeldenummer: 01980283.4
(22) Anmeldetag: 28.08.2001
(51) Int. Cl.: F16C 29/04, F16C 31/04, F16C 25/08, B21D 37/10, B30B 15/04

(54) **EINRICHTUNG ZUR FÜHRUNGSSPIELREDUZIERUNG UND/ODER VORSPANNUNGSÄNDERUNG BEI RUNDFÜHRUNGEN**
DEVICE FOR REDUCING GUIDE PLAY AND/OR FOR CHANGING THE PRETENSIONING IN ROUND GUIDES
DISPOSITIF POUR REDUIRE LE JEU DE GUIDAGE ET/OU MODIFIER LA PRECONTRAINTE DANS DES GUIDES RONDS

(30) Priorität: 23.09.2000 DE 10047240
(43) Veröffentlichungstag der Anmeldung: 18.06.2003
(73) Patentinhaber: WAFIOS Aktiengesellschaft, 72764 Reutlingen/Württ. (DE)
(72) Erfinder: GÖDTNER, Werner, 72764 Reutlingen (DE)
(74) Vertreter: Wolff, Michael, Dipl.-Phys.
(86) Internationale Anmeldenummer: EP0109874
(87) Internationale Veröffentlichungsnummer: WO02027201

(56) Entgegenhaltungen:
- DE-A- 4 334 878
- DE-A- 19 806 882
- US-A- 2 846 278
- US-A- 4 003 283
- US-A- 4 303 150
- PATENT ABSTRACTS OF JAPAN vol. 1999, no. 01, 29. Januar 1999 (1999-01-29) & JP 10 286701 A (OKUMA MACH WORKS LTD), 27. Oktober 1998 (1998-10-27)
- PATENT ABSTRACTS OF JAPAN vol. 017, no. 520 (M-1482), 20. September 1993 (1993-09-20) & JP 05 138408 A (HITACHI SEIKO LTD), 1. Juni 1993 (1993-06-01)

## Beschreibung

Gegenstand der Erfindung ist eine Rundstangenführung eines Schlittens gemäß Anspruch 1 sowie ein Verfahren zur Steuerung gemäß Anspruch 4 und eine Verwendung der Rundstangenführung gemäß Anspruch 5.

Wälzgelagerte Rundstangenführungen mit Kugeln oder Rollen als Wälzkörper zum Geradführen von Maschinenteilen, z. B. von Schlitten, gehören zum Stand der Technik und sind als Lagerware preiswert zu kaufen oder einfach und genau herzustellen. Diese translatorischen Rundführungen sind auch sehr gut gegen Schmiermittelaustritt abzudichten.

Ein großer Nachteil bei Rundführungen ist jedoch, daß diese bei zunehmenden Verschleiß nicht nachstellbar sind, um das sich vergrößernde Spiel der Wälzkörperlagerung zu reduzieren oder um die nachlassende Vorspannung der Wälzkörper wieder richtig einzustellen. Rundführungen müssen deshalb im Verschleißfall ausgetauscht werden.

Aus diesem Grund wurde bis jetzt auf die preiswerten Rundstangenführungen zum Geradführen von Pressschlitten, z. B. von Einstufen-Umformpressen oder Mehrstufenpressen, verzichtet. Die Schlittenführungen für die hin und her verschiebbar geführten Pressschlitten werden deshalb heute noch in der Regel als Flachführungen ausgeführt. Die Herstellung und Abdichtung dieser verschleißanfälligen Führungen ist aber schwierig und teuer. Ein Ausgleich des Verschleißes ist durch nachstellbare Keilleisten möglich.

Der Erfindung liegt deshalb die Aufgabe zugrunde, eine Rundstangenführung so weiterzubilden, dass sie nachstellbar ist, sodass auf die Verwendung nachteilbehafteter Flachführungen verzichtet werden kann.

Diese Aufgabe ist durch die Rundstangenführung gemäß Anspruch 1 gelöst, welche gemäß Anspruch 2 und/oder 3 ausgestaltet, gemäß Anspruch 4 gesteuert und gemäß Anspruch 5 verwendet sein kann.

Das aus der DE 43 34 878 A1 bekannte "spieleinstellbare Wälzlager" besteht aus einem nicht gezeigten Außenring, einem Innenring (8) und zwischen diesen auf zugehörigen Laufbahnen abrollenden, nicht gezeigten Wälzkörpern sowie einer im Innenring gelagerten Welle (1), für die dieses Radiallager bestimmt ist, dessen Spiel über den Innenring eingestellt werden kann, weil die Welle in axialer Richtung mit einem Hohlraum (Bohrung) versehen ist, in den ein Druckmedium (6) eingebracht ist, sodass die Welle hydrostatisch aufgeweitet werden kann.

Bei einem aus der JP 10-286.701 A bekannten Radiallager einer welle (1), auf der die Innenringe (4a, 5a) von zwei Kugellagern (4, 5) festsitzen, sind deren Außenringe (4b, 5b) innen konisch und sie sitzen in einem koaxialen beweglichen Gehäuse (10), das gegen eine axial wirkende Feder (13) mittels einer hydraulischen oder pneumatischen Einrichtung (20, 21) axial verschoben werden kann, sodass über die Konusse eine Änderung des Lagerspiets der Wätzkörper möglich ist. Außerdem kann das bewegliche Gehäuse (10) die Kugellager (4, 5) dadurch vorspannen, dass es mittels einer Kugelbüchse (9) in einem feststehenden Gehäuse (6) angeordnet ist, das eine an die Einrichtung (20, 19) angeschlossene Druckkammer (18) aufweist, welche die Kugeln (9a) radial gegen das bewegliche Gehäuse (10) pressen kann.

Im Folgenden wird die Erfindung anhand der durch die Zeichnung schematisch dargestellten Ausführungsform im Einzelnen erläutert. Es zeigen:
- Fig. 1: einen Längsschnitt durch eine Ausführungsform der Rundführung in beidenends abgebrochener Darstellung
- Fig. 2: einen Querschnitt durch die Ausführungsform von Fig. 1
- Fig. 3: einen vergrößerten Ausschnitt von Fig. 2
und
- Fig. 4: den vollständigen Längsschnitt, von dem Fig. 1 ein mittlerer Ausschnitt ist

Die in ihren konstruktiven Einzelheiten in der Zeichnung beispielhaft dargestellte, als Längsführung ausgeführte translatorische Rundführung 10 besteht aus einer zylindrischen Führungsachse 12 als Kern und einer Vielzahl von Wälzkörpern 14, die im Ausführungsbeispiel satteltonnenförmig ausgebildet und mittels eines nicht gezeigten Käfigs distanziert voneinander gehalten sind, sowie aus einer zylindrischen Führungsbuchse 16 als Außenring.

Bei dieser Rundführung 10 rollen die Wälzkörper 14 mit ihren zwei endseitigen Wälzkörperlaufflächen 18 an der ringförmigen konkaven inneren Führungsbahn 20 der Führungsbuchse 16 ab, während die mittleren sattelförmigen Laufflächen 22 dieser Wälzkörper 14 an der ringförmigen konvexen Führungsbahn 24 der Führungsachse 12 abrollen. Dieses Abrollen der Wälzkörper 14 an den durch diese getrennten Führungsbahnen 20 und 24 erfolgt unter Linienberührung derselben. Diese Rundführung 10 ist mit einem bestimmten Lagerspiel oder einer bestimmten Vorspannung gefertigt und kann z. B. zur linearen Führung von Schlitten im Maschinenbau eingesetzt werden.

Da sich im Verschleißfall die Abstände zwischen der ringförmigen konkaven Führungsbahn 20 der Führungsbuchse 16 und der endseitigen Lauffläche 18 der Wälzkörper 14 sowie zwischen der sattelförmigen Lauffläche 22 der Wälzkörper 14 und der ringförmigen konvexen Führungsbahn 24 der Führungsachse 12 vergrößern, soll dieses Maß an Lagerspiel oder verlorener Vorspannung der Wälzkörper 14 wieder auf das vorgesehene Maß eingestellt werden können.

Hierzu wird die Führungsachse 12 von einer Stirnseite der Achse 12 her mit einer koaxialen Topfbohrung 30 versehen, deren Tiefe etwas größer ist als die Gesamtführungslänge des zu führenden Maschinenteils, z. B. eines Schlittens, der bei zwei Führungsachsen 12 mit drei oder vier daran gelagerten Führungsbuchsen 16 versehen ist, oder als eine besonders kritische Teillänge dieser Gesamtführungslänge.

Der Durchmesser der Topfbohrung 30 ist so zu wählen, dass die Schwächung der Führungsachse 12, bezogen auf die Durchbiegung bei Belastung, noch vertretbar ist. Beispielsweise beträgt diese Schwächung bei einem Achsdurchmesser von 72 mm und einem Bohrungsdurchmesser von 30 mm 7 % .

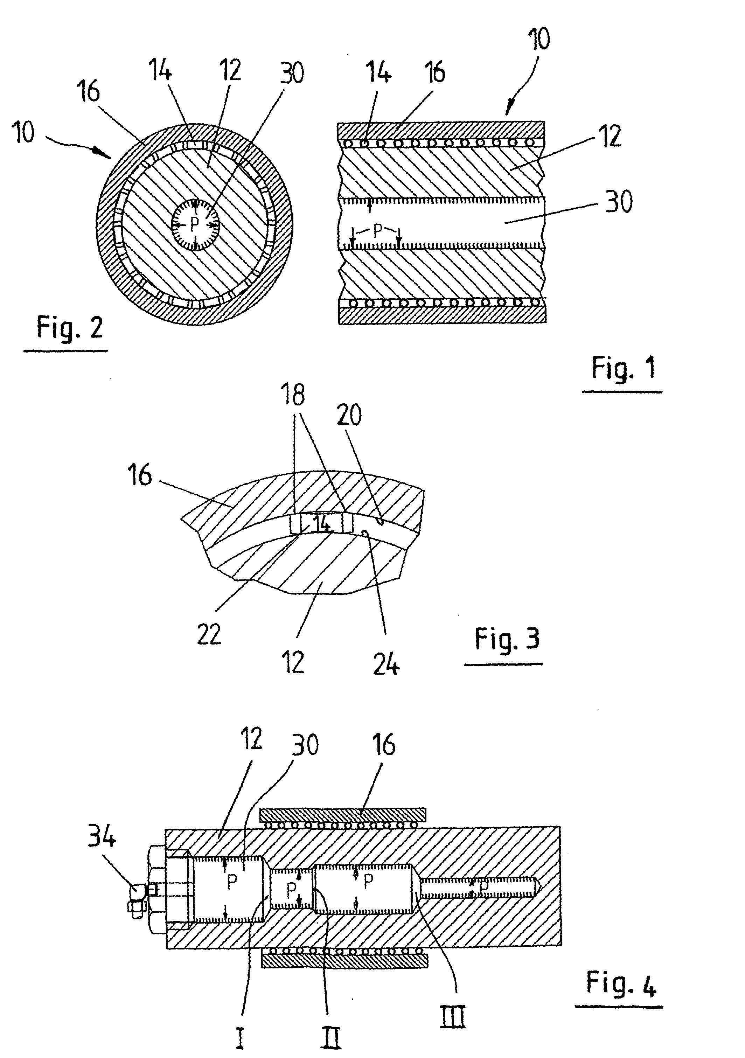

Die Topfbohrung 30 ist mit einem Druckmedium-Anschluss 34 verschlossen, über den die Topfbohrung 30 mit einem einstellbaren Druckmedium, vorzugsweise der Hydraulik oder Pneumatik, beaufschlagt wird. Hierzu ist der Anschluss 34 ggf. mit einem Hydraulikaggregat bzw. mit einer DruckLuftqueLLe verbunden, die nicht gezeigt sind. In Fig. 1, 2 und 4 ist dieser einstellbare Hydraulik- bzw. Pneumatikdruck P aber mit Pfeilen angedeutet.

Durch diesen radialen Druck P in der Topfbohrung 30 im Inneren der Führungsachse 12 dehnt sich deren radial äußerer Umfang der Bohrungs-Wandung, je nach Höhe des Medium-Drucks, um ein bestimmtes Maß im elastischen Bereich aus, sodass das, vom Materialverschleiß der Wälzkörper 14 und ihrer Laufflächen herrührende, vergrößerte Führungsspiel oder die verkleinerte Vorspannung wieder auf das ursprüngliche Spiel bzw. die ursprüngliche Vorspannung gezielt eingesteLLt werden kann. Bei dem zuvor genannten Achs- bzw. Bohrungsdurchmesser ergibt sich bei einem Druck P = 200 bar in der Topfbohrung 30 eine über die Länge der Achse 12 und deren Umfang gleichförmige radiale Aufweitung des äußeren Durchmessers der Führungsachse 12 um zwei Mikrometer.

In Fig. 4 ist zu sehen, dass die Topfbohrung 30 als Mehrfachstufenbohrung mit vier Abschnitten ausgebildet ist, deren Innendurchmesser in die Tiefe stufenweise zunächst abnimmt (Stufe I), dann nicht mehr auf den ursprünglichen Durchmesser zunimmt (Stufe II) und schließlich auf den kleinsten Durchmesser abnimmt (Stufe III). In allen Abschnitten der Bohrung 30 herrscht radial der gleiche Mediumsdruck. Wegen der in den verschiedenen Bohrungsabschnitten unterschiedlichen Wandstärke der Führungsachse 12 bewirkt die Druckbeaufschlagung ihrer Bohrung 30 in deren vier Abschnitten entsprechend verschiedene Änderungen des Führungsspiels oder der Vorspannung der WäLzkörper 14.

Besonders vorteilhaft ist es, wenn ein zu großes Führungsspiel oder eine zu kleine Vorspannung taktweise zu bestimmten Zeitpunkten ausgeglichen bzw. eingestellt werden kann, z. B. immer dann, wenn die Belastung des geführten Maschinenteiles am größten ist, während bei nachlassender BeLastung desselben das Führungsspiel vergrößert und die Vorspannung verkleinert werden kann, sodass die Führung somit reibungsärmer abrollen kann.

Die Erfindung kann bei präzise arbeitenden Einstufen-Umformpressen oder Mehrstufenpressen in Form von Schlittenführungen für den, z. B. mittels Kurbeltrieb hin- und herschiebbaren, Pressschlitten Anwendung finden, dessen Zweck es ist, mittels schlittenseitiger Umformwerkzeuge und stationärer Matrizen aus Werkstückrohlingen ggf. nach und nach fertig werdende Werkstücke, z. B. Bolzen, Nieten, Schrauben, aus Draht herzustellen.

Hierzu wird der nicht gezeigte Pressschlitten auf einem Paar paralleler, im Abstand voneinander durch den Pressschlitten hindurchgehender Führungsachsen 12 als Teil zweier Zylinderlängsführungen 10 oszillierend Längsverschiebbar geführt. Die aus dem Schlitten beidseitig herausragenden Enden beider Führungsachsen 12 sind im PressengesteLL gestellfest angeordnet, während die Führungsbüchsen 16 der beiden Rundführungen 10 im Pressschlitten drehfest und axial unverschiebbar gehalten sind. Die Tiefe der mit dem Druck P zu beaufschlagenden Topfbohrungen 30 in beiden Führungsachsen 12 reicht dabei etwas über die momentane Endstellung der vorderen Schlittenstirnseite nach ausgeführtem Schlittenvorhub nach vorn hinaus.

Es ist zweckmäßig und vorteilhaft, wenn das zuvor beschriebene taktweise Beaufschlagen der Topfbohrungen 30 mit dem Druck P zum 'Aufblasen' der Führungsachsen 12, über die Programmsteuerung der Umformpresse gesteuert, kurzzeitig dann erfolgt, wenn sich der Pressschlitten dem vorderen Umkehrpunkt nähert, um das Führungsspiel in den Rundführungen 10 beim Umformvorgang zu verringern, damit man ein maß- und formgenaues Produkt erhält.

## Patentansprüche

1. Rundstangenführung (10) eines Schlittens oder dergleichen an einer zylindrischen Führungsachse (12) mittels eines Wälzlagers, dessen Außenring eine am Schlitten gelagerte zylindrische Führungsbuchse (16) ist und Wälzkörper (14) umfasst, die an der inneren Führungsbahn (20) der Buchse (16) und unmittelbar an der Führungsbahn (24) der Achse (12) abrollen, **dadurch gekennzeichnet, dass** die Führungsachse (12) zur Führungsspielreduzierung und/oder Vorspannungsänderung im Wälzlager mit einer zentraLen koaxialen Topfbohrung (30) mit offenseitigem Anschluss (34) eines fluiden Druckmediums versehen ist.

2. Rundstangenführung nach Anspruch 1, wobei die Topfbohrung (30) der Führungsachse (12) mindestens zwei im Durchmesser verschiedene Abschnitte aufweist.

3. Rundstangenführung nach Anspruch 1 oder 2, **dadurch gekennzeichnet, dass** sich die Topfbohrung (30) in Vorhubrichtung des Schlittens oder dergleichen über dessen vorderen Umkehrpunkt hinaus erstreckt.

4. Verfahren zur Steuerung des Druckes des Mediums in der Topfbohrung (30) der Rundstangenführung nach einem der Ansprüche 1 bis 3, **dadurch gekennzeichnet, dass** der Druck während des Arbeitshubes des Schlittens oder dergleichen bei dessen Annäherung an seinen vorderen Umkehrpunkt erhöht wird und erhöht gehalten wird, bis dieser erreicht ist.

5. Verwendung einer Rundstangenführung nach einem der Ansprüche 1 bis 3 zur Längsführung des Pressschlittens in einer ein- oder mehrstufigen Umformpresse zur Drahtbeoder -verarbeitung.

## Claims

1. Round rod guide (10) of a slide or the like at a cylindrical guide axle (12) by means of a roller bearing, the outer ring of which is a cylindrical guide bush (16), which is mounted at the slide, and comprises roller bodies (14), which roll along the inner guide track (20) of the bush (16) and directly along the guide track (24) of the axle (12), **characterised in that** for reduction in guide play and/or change in bias in the roller bearing the guide axle (12) is provided with a central coaxial cup bore (30) with an open-end connection (34) of a fluid pressure medium.

2. Round rod guide according to claim 1, wherein the cup bore (30) of the guide axle (12) has at least two portions different in diameter.

3. Round rod guide according to claim 1 or 2, **characterised in that** the cup bore (30) extends, in the advance stroke direction of the slide or the like, beyond the forward point of reversal thereof.

4. Method of controlling the pressure of the medium in the cup bore (30) of the round rod guide according to one of claims 1 to 3, **characterised in that** the pressure during the working stroke of the slide or the like is increased on approach thereof to its forward point of reversal and is kept increased until this is reached.

5. Use of a round rod guide according to one of claims 1 to 3 for longitudinal guidance of the press slide in a single-stage or multi-stage reshaping press for wire working or wire processing.

## Revendications

1. Guide à barres rondes (10) d'un chariot ou similaire sur un axe de guidage (12) cylindrique, au moyen d'un palier de roulement dont la bague extérieure est un manchon de guidage cylindrique (16) et monté sur le chariot et comprend des corps de roulement (14), qui roulent sur la voie de guidage (20) intérieure du manchon (16) et directement sur la voie de guidage (24) de l'axe (12), **caractérisé en ce que** l'axe de guidage (12) est pourvu, pour la réduction du jeu de guidage et/ou la variation de la précontrainte dans le palier de roulement, d'un alésage en pot (30) coaxial et central ayant un raccordement (34) côté ouvert d'un fluide de pression.

2. Guide de barres rondes selon la revendication 1, l'alésage en pot (30) de l'axe de guidage (12) présentant au moins deux parties de diamètre différent.

3. Guide de barres rondes selon la revendication 1 ou 2, **caractérisé en ce que** l'alésage en pot (30) s'étend dans le sens d'avancement du chariot ou similaire au-delà de son point d'inversion avant.

4. Procédé de réglage de la pression du fluide dans l'alésage en pot (30) du guide de barres rondes selon l'une quelconque des revendications 1 à 3, **caractérisé en ce que** la pression est augmentée pendant la course de travail du chariot ou similaire lors de son rapprochement de sont point d'inversion avant et est maintenue à un niveau élevé jusqu'à ce que ce point soit atteint.

5. Utilisation d'un guide de barres rondes selon l'une quelconque des revendications 1 à 3 pour le guidage longitudinal du chariot de presse dans une presse de formage à un ou plusieurs étages pour le traitement ou l'usinage de fil métallique.
